# EUROPÄISCHE PATENTSCHRIFT

(11) **EP 2 878 027 B1**
(45) Veröffentlichungstag und Bekanntmachung des Hinweises auf die Patenterteilung: **12.09.2018**
(21) Anmeldenummer: 13739355.9
(22) Anmeldetag: 11.07.2013
(51) Int. Cl.: H01M 8/02, B29C 65/48

(54) **VERFAHREN UND VORRICHTUNG ZUM VERBINDEN VON BAUTEILEN EINER BRENNSTOFFZELLE**
METHOD AND APPARATUS FOR CONNECTING COMPONENT PARTS OF A FUEL CELL
PROCÉDÉ ET DISPOSITIF D'ASSEMBLAGE DE COMPOSANTS D'UNE PILE À COMBUSTIBLE

(30) Priorität: 26.07.2012 DE 102012014757
(43) Veröffentlichungstag der Anmeldung: 03.06.2015
(73) Patentinhaber: Daimler AG, 70327 Stuttgart (DE)
(72) Erfinder: WULFF, Christian, 71634 Ludwigsburg (DE)
(74) Vertreter: JENSEN & SON
(86) Internationale Anmeldenummer: PCT/EP2013/002071
(87) Internationale Veröffentlichungsnummer: WO 2014/015955

(56) Entgegenhaltungen:
- WO-A1-2008/040682
- DE-A1-102007 005 589
- DE-A1-102009 039 029
- US-A1- 2009 162 734

## Beschreibung

Die Erfindung betrifft ein Verfahren zum Verbinden von Bauteilen einer Brennstoffzelle nach den Merkmalen des Oberbegriffs des Anspruchs 1 und eine Vorrichtung zum Verbinden von Bauteilen einer Brennstoffzelle nach den Merkmalen des Oberbegriffs des Anspruchs 7.

Aus dem Stand der Technik ist, wie in der US 2009/0162734 A1 beschrieben, ein Verfahren zur Herstellung einer Membran-Elektroden-Anordnung einer Brennstoffzelle bekannt. Dabei wird ein durch Lichtbestrahlung härtendes Harz auf eine mit einem Katalysator beschichtete Membran (CCM) aufgebracht und durch Lichtbestrahlung vorgehärtet. Eine Gasdiffusionsschicht wird zum Ausbilden der Membran-Elektroden-Anordnung auf die Membran aufgebracht und mit dem vorgehärteten Harz in Kontakt gebracht. Danach wird das Harz in einem thermischen Aushärtprozess vollständig ausgehärtet.

In der WO 2008/040682 A1 wird ein Verfahren zur Herstellung einer Membran-Elektrodeneinheit beschrieben. Die Membran-Elektrodeneinheit enthält eine Anodenkatalysatorschicht, eine Polymerelektrolytmembran und eine Kathodenkatalysatorschicht. Im Verfahren wird eine erste Umrandung aus einem UV-härtbaren Material auf die Polymerelektrolytmembran aufgebracht, wobei ein innerer Bereich der Polymerelektrolytmembran frei von dem UV-härtbaren Material bleibt. Es wird eine Katalysatorschicht aufgetragen, die den inneren Bereich der Polymerelektrolytmembran bedeckt und mit der ersten Umrandung überlappt. Es wird eine zweite Umrandung aus dem UV-härtbaren Material auf die erste Umrandung aufgebracht, wobei die zweite Umrandung die Katalysatorschicht umgibt. Es wird eine dritte Umrandung aus dem UV-härtbaren Material auf die zweite Umrandung aufgebracht, wobei die dritte Umrandung mit der Katalysatorschicht überlappt. Die erste, zweite und dritte Umrandung werden mit UV-Strahlung bestrahlt.

Der Erfindung liegt die Aufgabe zu Grunde, ein verbessertes Verfahren und eine verbesserte Vorrichtung zum Verbinden von Bauteilen einer Brennstoffzelle anzugeben.

Die Aufgabe wird erfindungsgemäß gelöst durch ein Verfahren zum Verbinden von Bauteilen einer Brennstoffzelle mit den Merkmalen des Anspruchs 1 und eine Vorrichtung zum Verbinden von Bauteilen einer Brennstoffzelle mit den Merkmalen des Anspruchs 7.

Vorteilhafte Ausgestaltungen der Erfindung sind Gegenstand der Unteransprüche.

In einem Verfahren zum Verbinden von Bauteilen einer Brennstoffzelle wird ein photochemisch härtbarer Klebstoff in flüssiger Form zumindest bereichsweise auf zumindest ein Bauteil der Brennstoffzelle aufgebracht, photochemisch vorgehärtet, mit zumindest einem weiteren Bauteil der Brennstoffzelle in Kontakt gebracht und ausgehärtet.

Erfindungsgemäß wird der Klebstoff in zumindest zwei Bauteilbereichen des Bauteils unterschiedlich stark photochemisch vorgehärtet. Dieses Vorhärten wird auch als Vorvernetzen des Klebstoffs bezeichnet.

Auf diese Weise können rheologische Eigenschaften des Klebstoffs gezielt eingestellt werden und dadurch an jeweilige Erfordernisse in den verschiedenen Bauteilbereichen des Bauteils angepasst werden, so dass eine optimale Klebeverbindung der miteinander zu verklebenden Bauteile der Brennstoffzelle sichergestellt werden kann. Durch ein stärkeres Vorhärten des Klebstoffs wird eine Viskosität des Klebstoffs erhöht, so dass ein Verlaufen des Klebstoffs auf dem Bauteil verhindert wird. Durch ein geringeres Vorhärten weist der Klebstoff nach dem Vorhärten eine entsprechend geringere Viskosität, d. h. eine höhere Fluidität auf, so dass er sich besser verteilen kann und beispielsweise in raue und/oder poröse Strukturen besser eindringen kann, so dass beispielsweise eine Rauheit durch den Klebstoff ausgeglichen werden kann. Dadurch kann der Klebstoff beispielsweise auch als Dichtung eingesetzt werden, wobei durch die optimale und gleichmäßige Verteilung, insbesondere in dem Bauteilbereich, in welchem er nach dem Vorhärten noch eine geringe Viskosität aufweist, eine sichere Dichtwirkung erreicht wird.

Im Vergleich zu aus dem Stand der Technik bekannten filmischen Klebstoffen, welche warmhärtend sind und flächig gefügt werden, tritt durch Einsatz des flüssigen, photochemisch härtbaren Klebstoffs kein Verschnitt auf und dadurch kein erhöhter Materialeinsatz. Des Weiteren sind Aushärtzeiten durch den photochemisch härtbaren Klebstoff stark reduziert und der photochemisch härtbare Klebstoff ist, im Gegensatz zum filmischen Klebstoff, kontaktlos auszuhärten. Zudem sind mit dem photochemisch härtbaren Klebstoff Kostenredzuzierungen zu erreichen.

In einer vorteilhaften Ausführungsform wird der photochemisch härtbare Klebstoff nur in den Bauteilbereichen auf das zumindest eine Bauteil aufgebracht, in welchen er danach auch photochemisch vorgehärtet wird. D. h. der gesamte auf das zumindest eine Bauteil aufgebrachte photochemisch härtbare Klebstoff wird photochemisch vorgehärtet, wobei er in unterschiedlichen Bauteilbereichen des zumindest einen Bauteils der Brennstoffzelle unterschiedlich stark photochemisch vorgehärtet wird. Auf diese Weise wird ein unkontrolliertes Verlaufen nicht vorgehärteten und dadurch sehr dünnflüssigen Klebstoffs auf dem zumindest einen Bauteil der Brennstoffzelle vermieden, d. h. es wird beispielsweise ein Benetzen von Bereichen des Bauteils mit dem Klebstoff vermieden, welche von dem Klebstoff freizuhalten sind.

Vorzugsweise wird der photochemisch härtbare Klebstoff zumindest bereichsweise auf ein als ein erstes Rahmenelement einer Membran-Elektroden-Anordnung ausgebildetes erstes Bauteil der Brennstoffzelle und auf ein als ein zweites Rahmenelement der Membran-Elektroden-Anordnung ausgebildetes drittes Bauteil der Brennstoffzelle aufgebracht, wobei nach dem photochemischen Vorhärten des photochemisch härtbaren Klebstoffs ein als eine katalysatorbeschichtete Membran der Membran-Elektroden-Anordnung ausgebildetes zweites Bauteil der Brennstoffzelle zwischen dem ersten Bauteil und dem dritten Bauteil positioniert wird, die drei Bauteile zusammengefügt werden und der photochemisch härtbare Klebstoff ausgehärtet wird. Während des Zusammenfügens der drei Bauteile wird der Klebstoff auch mit dem zweiten Bauteil in Kontakt gebracht, so dass auch das erste Bauteil mit dem dritten Bauteil verklebt wird und das zweite Bauteil mit den beiden anderen Bauteilen verklebt wird.

Dabei wird der Klebstoff vor dem Zusammenfügen der drei Bauteile beispielsweise in Einström- und/oder Ausströmbereichen der Membran-Elektroden-Anordnung stärker vorgehärtet, da hier eine hohe geometrische Genauigkeit erforderlich ist, weil es sich hierbei um freistehende Strukturen im Fügeverbund der Membran-Elektroden-Anordnung handelt. Durch ein stärkeres Vorhärten des Klebstoffs erhält der Klebstoff eine erforderliche Festigkeit, so dass in diesen Bauteilbereichen ein Verlaufen des Klebstoffs verhindert wird.

In Einschlussbereichen der katalysatorbeschichteten Membran zwischen den beiden Rahmenelementen, welche beispielsweise jeweils als Polymerfolie ausgebildet sind, zum Beispiel aus Polypropylen, bleibt der Klebstoff durch das geringere Vorhärten noch dünnflüssig genug, um hier eine optimale Benetzung einer porösen Oberfläche der katalysatorbeschichteten Membran sicherzustellen und eine innere Dichtung zwischen der katalysatorbeschichteten Membran und den beiden miteinander verklebten Rahmenelementen auszubilden. Die katalysatorbeschichtete Membran ist beispielsweise als eine Kunststofffolie ausgebildet, welche mit Kohlenstoff, beispielsweise in Form von Kohlepuder, beschichtet ist. Sie ist porös und weist eine große Oberfläche auf. Insbesondere aufgrund dieser Porosität ist ein relativ dünnflüssiger Klebstoff erforderlich, um die Poren in mit den beiden Rahmenelementen zu verklebenden Randbereichen der katalysatorbeschichteten Membran zu füllen und dadurch ein optimales Verkleben mit den beiden Rahmenelementen und eine Dichtwirkung des Klebstoffs sicherzustellen.

Zweckmäßigerweise wird der photochemisch härtbare Klebstoff mittels ultravioletter Strahlung und/oder Infrarotstrahlung photochemisch vorgehärtet. Dazu wird der Klebstoff mittels ultravioletter Strahlung und/oder Infrarotstrahlung bestrahlt. Dies wird beispielsweise mittels einer oder zweckmäßigerweise mittels einer Mehrzahl von als Licht emittierende Dioden, d. h. UV-Licht bzw. Infrarotlicht emittierenden Dioden, oder röhrenförmig ausgebildeten Strahlungsquellen durchgeführt, d. h. mittels röhrenförmiger UV-Strahler bzw. Infrarotstrahler. Werden röhrenförmige UV-Strahler verwendet, so können diese beispielsweise jeweils als Niederdruckstrahler, Mitteldruckstrahler oder Hochdruckstrahler ausgebildet sein. Durch eine Mehrzahl derartiger Strahlungsquellen wird eine flächige Bestrahlung des mit dem Klebstoff beschichteten Bauteils erreicht. Durch das Härten mittels ultravioletter Strahlung und/oder Infrarotstrahlung wird insbesondere ein Härten des Klebstoffs allein durch sichtbares Licht und dadurch ein unkontrolliertes Aushärten des Klebstoffs verhindert. Dazu ist natürlich photochemisch härtbarer Klebstoff zu verwenden, welcher entsprechend mittels ultravioletter Strahlung und/oder mittels Infrarotstrahlung zu härten ist. Im Rahmen der vorliegenden Erfindung ist jedoch die Verwendung von UV-Strahlung bevorzugt.

In einer vorteilhaften Ausführungsform wird der photochemisch härtbare Klebstoff photochemisch ausgehärtet, d. h. das Aushärten des photochemisch härtbaren Klebstoffs, nachdem die miteinander zu verklebenden Bauteile zusammengefügt und mit dem photochemisch vorgehärteten Klebstoff in Kontakt gebracht wurden, wird ebenfalls photochemisch durchgeführt. Auf diese Weise ist nicht nur das Vorhärten des Klebstoffs, sondern auch das vollständige Aushärten des Klebstoffs kontaktlos möglich. D. h. ein Kontaktieren des Bauteils bzw. der miteinander zu verbindenden Bauteile mit einem Heizelement und ein erhöhter Wärmeeintrag sind nicht erforderlich. Dadurch werden Beschädigungen der Bauteile durch zu starke Wärmeeinwirkungen vermieden. Auch dieses Aushärten des Klebstoffs wird zweckmäßigerweise mittels ultravioletter Strahlung und/oder mittels Infrarotstrahlung durchgeführt. Dazu kann dieselbe Bestrahlungsanordnung verwendet werden wie zum Vorhärten des Klebstoffs.

Alternativ wäre es jedoch auch möglich, das Aushärten des Klebstoffs auf andere Weise durchzuführen. Es müsste sich dementsprechend bei dem photochemisch härtbaren Klebstoff um einen Klebstoff handeln, welcher photochemisch härtbar ist und auf andere Weise härtbar ist, beispielsweise durch einen Wärmeeintrag über zumindest eine Heizeinheit, d. h. um einen zumindest auch photochemisch härtbaren Klebstoff. In dieser Ausführungsform des Verfahrens würde der zumindest auch photochemisch härtbare Klebstoff dann photochemisch vorgehärtet und auf andere Weise, beispielsweise durch Erwärmen, ausgehärtet.

Zweckmäßigerweise wird das mit dem photochemisch härtbaren Klebstoff beschichtete Bauteil vor dem photochemischen Vorhärten des Klebstoffs derart maskiert, dass zum photochemischen Vorhärten des Klebstoffs die zumindest zwei Bauteilbereiche mit einer unterschiedlichen Bestrahlungsintensität bestrahlt werden. Auf diese Weise wird das unterschiedlich starke Vorhärten des Klebstoffs erreicht. Entweder wird der Bauteilbereich, in welchem der Klebstoff stärker vorgehärtet werden soll, nicht maskiert oder die Maskierung wird in diesem Bereich durchlässiger für die jeweils verwendete Strahlung, zweckmäßigerweise die ultraviolette Strahlung und/oder die Infrarotstrahlung, ausgebildet als in dem Bereich, in welchem der Klebstoff weniger stark vorgehärtet werden soll. Die Maskierung kann dabei derart ausgebildet sein, dass sie die Strahlung absorbiert und/oder reflektiert, entsprechend stärker, je weniger der Klebstoff vorgehärtet werden soll. Je mehr Strahlung von der Maskierung absorbiert und/oder reflektiert wird, desto weniger Strahlung dringt durch die Maskierung hindurch, welche durch die Maskierung weder reflektiert noch absorbiert wird und dadurch den Klebstoff erreicht, um diesen photochemisch vorzuhärten.

Auch zum Aushärten des photochemisch härtbaren Klebstoffs, nachdem die Bauteile zusammengefügt sind, kann eine derartige Maskierung verwendet werden, um auch hier in unterschiedlichen Bauteilbereichen eine unterschiedliche Bestrahlung und dadurch ein unterschiedliches Aushärtverhalten des Klebstoffs zu erreichen. Soll dabei das Aushärten analog dem Vorhärten erfolgen, so kann dieselbe Maskierung erneut verwendet werden, welche bereits zum Vorhärten verwendet wurde.

In einer vorteilhaften Ausführungsform wird der photochemisch härtbare Klebstoff mittels Siebdruck auf das zumindest eine Bauteil der Brennstoffzelle aufgebracht. Dadurch wird ein hochgenaues Aufbringen des Klebstoffs ermöglicht. Insbesondere wird dadurch ein selektives Aufbringen des Klebstoffs ermöglicht, d. h. der Klebstoff kann beispielsweise lediglich bereichsweise und nicht vollflächig auf das Bauteil aufgebracht werden und auch in verschiedenen Bereichen in unterschiedlichen Stärken. Alternativ kann der Klebstoff beispielsweise auch aufgespritzt bzw. aufgesprüht werden, aufgestrichen werden oder mittels anderer bekannter Drucktechniken oder Klebstoffaufbringtechniken aufgebracht werden.

Eine erfindungsgemäße Vorrichtung zum Verbinden von Bauteilen einer Brennstoffzelle, mittels welcher das Verfahren zum Verbinden von Bauteilen einer Brennstoffzelle durchführbar ist, umfasst eine Aufbringeinheit zum zumindest bereichsweisen Aufbringen eines photochemisch härtbaren Klebstoffs auf zumindest ein Bauteil der Brennstoffzelle, eine Bestrahlungsanordnung zum photochemischen Vorhärten des photochemisch härtbaren Klebstoffs und eine Maskierung zum zumindest bereichsweisen Maskieren des mit dem photochemisch härtbaren Klebstoff beschichteten Bauteils der Brennstoffzelle derart, dass zum photochemischen Vorhärten des photochemisch härtbaren Klebstoffs zumindest zwei Bauteilbereiche mit einer unterschiedlichen Bestrahlungsintensität bestrahlbar sind. Auch das photochemische Aushärten des photochemisch härtbaren Klebstoffs nach dem Verbinden der Bauteile, d. h. nach dem Kontaktieren der miteinander zu verbindenden Bauteile mit dem Klebstoff, ist mittels dieser Vorrichtung möglich, insbesondere mittels der Bestrahlungsanordnung der Vorrichtung.

Die Vorrichtung ermöglicht die Durchführung des geschilderten Verfahrens und dadurch die aus dem Verfahren resultierenden, bereits genannten Vorteile. Auf diese Weise sind rheologische Eigenschaften des Klebstoffs gezielt einzustellen und dadurch an jeweilige Erfordernisse in den verschiedenen Bauteilbereichen des Bauteils anzupassen, so dass eine optimale Klebeverbindung der miteinander zu verklebenden Bauteile der Brennstoffzelle sicherzustellen ist. Durch ein stärkeres Vorhärten des Klebstoffs ist eine Viskosität des Klebstoffs zu erhöhen, so dass ein Verlaufen des Klebstoffs auf dem Bauteil zu verhindern ist. Durch ein geringeres Vorhärten weist der Klebstoff nach dem Vorhärten eine entsprechend geringere Viskosität, d. h. eine höhere Fluidität auf, so dass er sich besser verteilen kann und beispielsweise in raue und/oder poröse Strukturen besser eindringen kann, so dass beispielsweise eine Rauheit durch den Klebstoff ausgleichbar ist. Dadurch ist der Klebstoff beispielsweise auch als Dichtung zu verwenden, wobei durch die optimale und gleichmäßige Verteilung, insbesondere in dem Bauteilbereich, in welchem er nach dem Vorhärten noch eine geringe Viskosität aufweist, eine sichere Dichtwirkung erreichbar ist.

Durch die Maskierung ist das unterschiedlich starke Vorhärten des Klebstoffs zu erreichen. Entweder ist der Bauteilbereich, in welchem der Klebstoff stärker vorzuhärten ist, nicht zu maskieren oder die Maskierung ist in diesem Bereich durchlässiger für die Strahlung auszubilden als in dem Bereich, in welchem der Klebstoff weniger stark vorzuhärten ist. Die Maskierung kann dabei derart ausgebildet sein, dass sie die Strahlung absorbiert und/oder reflektiert, entsprechend stärker, je weniger der Klebstoff vorzuhärten ist.

Vorzugsweise weist die Bestrahlungsanordnung zumindest eine als Licht emittierende Diode ausgebildete Strahlungsquelle und/oder zumindest eine röhrenförmige Strahlungsquelle auf. Zweckmäßigerweise weist die Bestrahlungsanordnung eine Mehrzahl derartiger Strahlungsquellen auf. Durch diese Strahlungsquellen wird insbesondere eine flächige Bestrahlung des mit Klebstoff beschichteten Bauteils erreicht.

Zweckmäßigerweise ist die zumindest eine Strahlungsquelle als eine ultraviolette Strahlung abstrahlende Strahlungsquelle und/oder als eine Infrarotstrahlung abstrahlende Strahlungsquelle ausgebildet. Dies ermöglicht das photochemische Härten des photochemisch härtbaren Klebstoffs durch ultraviolette Strahlung und/oder Infrarotstrahlung. Dadurch ist insbesondere ein Härten des Klebstoffs allein durch sichtbares Licht und dadurch ein unkontrolliertes Härten des Klebstoffs verhindert.

Vorzugsweise ist die Aufbringeinheit als eine Siebdruckeinheit ausgebildet. Dadurch ist ein hochgenaues Aufbringen des photochemisch härtbaren Klebstoffs ermöglicht. Insbesondere ist dadurch ein selektives Aufbringen des Klebstoffs ermöglicht, d. h. der Klebstoff ist beispielsweise lediglich bereichsweise und nicht vollflächig auf das Bauteil aufzubringen und auch in verschiedenen Bereichen in unterschiedlichen Stärken.

Ausführungsbeispiele der Erfindung werden im Folgenden anhand von Zeichnungen näher erläutert.

Dabei zeigen:
- Fig. 1: schematisch einen Ablaufplan eines Verfahrens zum Verbinden von Bauteilen einer Brennstoffzelle,
- Fig. 2: schematisch ein mit einem photochemisch härtbaren Klebstoff benetztes Bauteil einer Brennstoffzelle in Draufsicht,
- Fig. 3: schematisch eine Schnittdarstellung eines Bauteils einer Brennstoffzelle entsprechend der Schnittlinie III-III in Figur 2, einer Maskierung und einer Bestrahlungsanordnung, und
- Fig. 4: schematisch eine Schnittdarstellung einer Membran-Elektroden-Anordnung, einer Maskierung und einer Bestrahlungsanordnung.

Einander entsprechende Teile sind in allen Figuren mit den gleichen Bezugszeichen versehen.

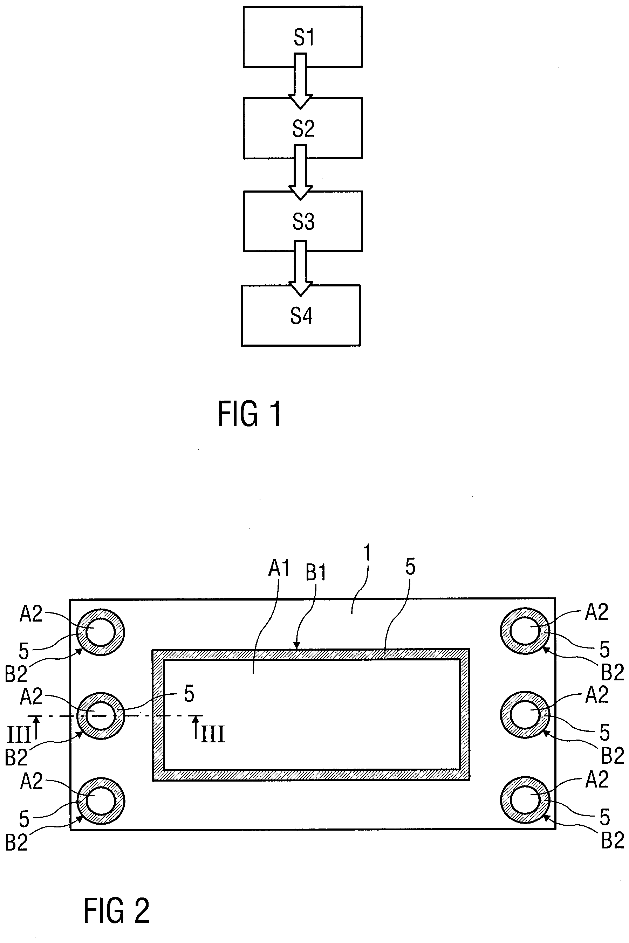

Figur 1 zeigt schematisch einen Ablaufplan eines Verfahrens zum Verbinden von Bauteilen 1, 2, 3 einer hier nicht näher dargestellten Brennstoffzelle. In den Figuren 2 bis 4 ist der Verfahrensablauf anhand eines Beispiels schematisch dargestellt, wobei mittels des Verfahrens eine Membran-Elektroden-Anordnung 4 der Brennstoffzelle ausgebildet wird. Dazu sind drei Bauteile 1, 2, 3 miteinander zu verbinden, ein als ein erstes Rahmenelement der Membran-Elektroden-Anordnung 4 ausgebildetes erstes Bauteil 1, ein als katalysatorbeschichtete Membran der Membran-Elektroden-Anordnung 4 ausgebildetes zweites Bauteil 2 und ein als zweites Rahmenelement der Membran-Elektroden-Anordnung 4 ausgebildetes drittes Bauteil 3.

Um diese Bauteile 1, 2, 3 miteinander zu verbinden, wird in einem ersten Verfahrensschritt S1 ein photochemisch härtbarer Klebstoff 5 in flüssiger Form bereichsweise auf das erste Bauteil 1 und auf das dritte Bauteil 3 aufgebracht, d. h. auf das erste und das zweite Rahmenelement. Anschließend wird der Klebstoff 5 in einem zweiten Verfahrensschritt S2 photochemisch vorgehärtet. In einem dritten Verfahrensschritt S3 werden die drei Bauteile 1, 2, 3 in vorgegebener Weise zueinander positioniert, so dass auch das zweite Bauteil 2, d. h. die katalysatorbeschichtete Membran mit dem auf dem ersten Bauteil 1 und dem dritten Bauteil 3 aufgebrachten Klebstoff 5 in Kontakt gebracht wird. Anschließend wird der Klebstoff 5 in einem vierten Verfahrensschritt S4 ausgehärtet.

Die beiden Rahmenelemente der Membran-Elektroden-Anordnung 4 der Brennstoffzelle, d. h. das erste und das dritte Bauteil 1, 3, sind beispielsweise jeweils als eine Polymerfolie ausgebildet, zum Beispiel aus Polypropylen. Diese Rahmenelemente weisen jeweils in einem zentralen Bereich eine großflächige erste Aussparung A1 auf, wie in Figur 2 dargestellt. Dabei ist in Figur 2 lediglich das erste Bauteil 1, d. h. das erste Rahmenelement, dargestellt. Das dritte Bauteil 3, d. h. das zweite Rahmenelement, ist jedoch korrespondierend dazu ausgebildet. Die folgenden Erläuterungen treffen daher jeweils analog auf beide Rahmenelemente zu, d. h. sowohl auf das in Figur 2 dargestellte erste Bauteil 1 als auch auf das korrespondierend dazu ausgebildete dritte Bauteil 3.

In dem Bereich der ersten Aussparung A1 im ersten und dritten Bauteil 1, 3 ist das zweite Bauteil 2 anzuordnen, d. h. die katalysatorbeschichtete Membran. Auf diese Weise ist die katalysatorbeschichtete Membran von den Rahmenelementen einzurahmen, d. h. randseitig zu umschließen. Die katalysatorbeschichtete Membran ist beispielsweise als eine Kunststofffolie ausgebildet, welche mit Kohlenstoff, beispielsweise in Form von Kohlepuder, beschichtet ist. Die katalysatorbeschichtete Membran ist porös und weist eine große Oberfläche auf.

Die Rahmenelemente, d. h. das erste und dritte Bauteil 1, 3, weisen des Weiteren in Querrandbereichen zweite Aussparungen A2 auf, welche als Einström- und/oder Ausströmbereiche der Membran-Elektroden-Anordnung 4 dienen, d. h. als so genannte Ports. Durch diese zweiten Aussparungen A2 hindurch werden Reaktionsgase einem aktiven Bereich der Brennstoffzelle zugeleitet bzw. Reaktionsprodukte von diesem abgeleitet. Des Weiteren kann über eine oder mehrere dieser zweiten Aussparungen A2 auch ein Temperiermedium durch einen entsprechenden Temperiermediumbereich der Brennstoffzelle hindurchgeleitet werden, d. h. in diesen eingeleitet und auch wieder aus diesem abgeleitet werden.

Aus dem Stand der Technik ist es bekannt, diese Rahmenelemente und die katalysatorbeschichtete Membran mittels filmischer Kleber zu verbinden, welche warmhärtend sind und flächig gefügt werden. Bei diesen filmischen Klebern tritt jedoch ein großer Verschnitt auf, so dass ein entsprechend hoher Materialeinsatz erforderlich ist, verbunden mit entsprechend hohen Kosten. Des Weiteren erfordert der filmische Kleber lange Aushärtzeiten und das Aushärten muss durch Aufsetzen von Heizelementen erfolgen, d. h. durch Kontaktieren dieser Heizelemente mit den Rahmenelementen und/oder der katalysatorbeschichteten Membran. Dadurch können Beschädigungen durch einen zu hohen Wärmeeintrag auftreten.

Des Weiteren ist es aus dem Stand der Technik bekannt, flüssigen Kleber einzusetzen und diesen photochemisch vorzuhärten. Dieses Vorhärten erfolgt jedoch durch eine gleichmäßige vollflächige Bestrahlung, so dass der Kleber in allen Bereichen gleichmäßig vorgehärtet wird. Das vollständige Aushärten des Klebers nach dem Fügen der zu verbindenden Teile wird dann wieder thermisch durchgeführt, mit den geschilderten Nachteilen.

Im hier dargestellten Verfahren wird im ersten Verfahrensschritt S1 der photochemisch härtbare Klebstoff 5 in flüssiger Form gezielt auf vorgegebene Bauteilbereiche B1, B2 des ersten Bauteils 1 und des dritten Bauteils 3, d. h. der Rahmenelemente, aufgebracht. Dies kann für beide Bauteile 1, 3 gleichzeitig erfolgen oder nacheinander. Dabei bedeutet gezieltes Aufbringen, dass sowohl der jeweilige Bauteilbereich B1, B2, in dem der Klebstoff 5 aufzubringen ist, als auch eine jeweils aufzubringende Menge des Klebstoffs 5 vorgegeben wird. Dieses gezielte Aufbringen ist beispielsweise mittels eines Siebdruckverfahrens sehr genau durchzuführen. Zu diesem Zweck ist eine hier nicht näher dargestellte Aufbringeinheit einer Vorrichtung zur Durchführung des Verfahrens als eine Siebdruckeinheit ausgebildet. Soll der Klebstoff 5 gleichzeitig auf das erste und dritte Bauteil 1, 3 aufgebracht werden, so ist eine entsprechend groß ausgebildete Aufbringeinheit erforderlich oder es sind zwei Aufbringeinheiten erforderlich.

In diesem Beispiel wird der Klebstoff 5, wie in Figur 2 dargestellt, in Randbereichen auf das erste Bauteil 1 und das dritte Bauteil 3 aufgebracht, welche die Aussparungen A1, A2 umgeben, d. h. auf einen ersten Bauteilbereich B1, welcher die erste Aussparung A1 des ersten bzw. dritten Bauteils 1, 3 umschließt, und auf zweite Bauteilbereiche B2, welche jeweils eine zweite Aussparung A2 des ersten bzw. dritten Bauteils 1, 3 umschließen. Wie bereits erwähnt, ist in Figur 2 aus Gründen der Übersichtlichkeit lediglich das erste Bauteil 1 dargestellt. Der Klebstoffauftrag auf das dritte Bauteil 3 erfolgt jedoch, wie beschrieben, auf gleiche Weise. Der Klebstoff 5 wird dabei nur auf eine Oberflächenseite des jeweiligen Bauteils 1, 3 aufgebracht. Über diese Oberflächenseite sind die beiden Bauteile 1, 3 dann miteinander und jeweils mit dem zweiten Bauteil 2 zu verkleben.

Unmittelbar nach dem Aufbringen weist der Klebstoff 5 in allen Bauteilbereichen B1, B2, in welchen er auf das erste Bauteil 1 und das dritte Bauteil 3 aufgebracht wurde, die gleiche Konsistenz auf, d. h. er ist flüssig und weist daher eine sehr geringe Viskosität auf. Der Klebstoff 5 ist photochemisch härtbar, d. h. eine Bestrahlung mit Licht einer oder mehrerer vorgegebener Wellenlängen löst in dem Klebstoff 5 eine chemische Reaktion aus, welche zu einem sukzessiven Härten bzw. Vernetzen des Klebstoffs 5 führt, so dass dessen Viskosität bei fortgesetzter Bestrahlung so lange zunimmt, bis der Klebstoff 5 vollständig ausgehärtet ist. Wie schnell dieser photochemische Prozess abläuft, ist abhängig von einer auf den Klebstoff 5 einwirkenden Bestrahlungsintensität, d. h. je höher die Bestrahlungsintensität, desto schneller härtet der Klebstoff 5. Eventuell wird der Klebstoff 5, abhängig von einer jeweils verwendeten Klebstoffart, vor Beginn des Härtens durch die Bestrahlung zunächst aktiviert und dann zunehmend gehärtet.

Um ein unkontrolliertes Härten des Klebstoffs 5 zu vermeiden, wird zweckmäßigerweise Klebstoff 5 verwendet, welcher nicht oder zumindest nur sehr gering bei sichtbarem Licht härtet, sondern welcher durch ultraviolette Strahlung und/oder durch Infrarotstrahlung photochemisch zu härten ist. Auf diese Weise kann die Herstellung der Membran-Elektroden-Anordnung 4 mit Ausnahme des Härtens des Klebstoffs 5 bei normalen Umgebungslichtbedingungen durchgeführt werden, ohne ein unkontrolliertes Härten des Klebstoffs 5 zu riskieren, da das Härten des Klebstoffs 5 durch den kontrollierten Einsatz von ultravioletter Strahlung und/oder Infrarotstrahlung durchzuführen ist.

Nachdem der Klebstoff 5 im ersten Verfahrensschritt S1 auf das erste Bauteil 1 und das dritte Bauteil 3, d. h. auf die beiden Rahmenelemente, aufgebracht wurde, wird der Klebstoff 5 im zweiten Verfahrensschritt S2 photochemisch vorgehärtet. Dies erfolgt nun jedoch nicht, wie aus dem Stand der Technik bekannt, durch eine vollflächige gleichmäßige Bestrahlung, sondern gezielt. D. h. der Klebstoff 5 wird in den unterschiedlichen Bauteilbereichen B1, B2 des ersten Bauteils 1 bzw. des dritten Bauteils 3 unterschiedlich stark vorgehärtet bzw. vorvernetzt. Dies ist durch eine auf den Klebstoff 5 in diesen unterschiedlichen Bauteilbereichen B1, B2 mit einer unterschiedlichen Bestrahlungsintensität einwirkende Strahlung zu realisieren.

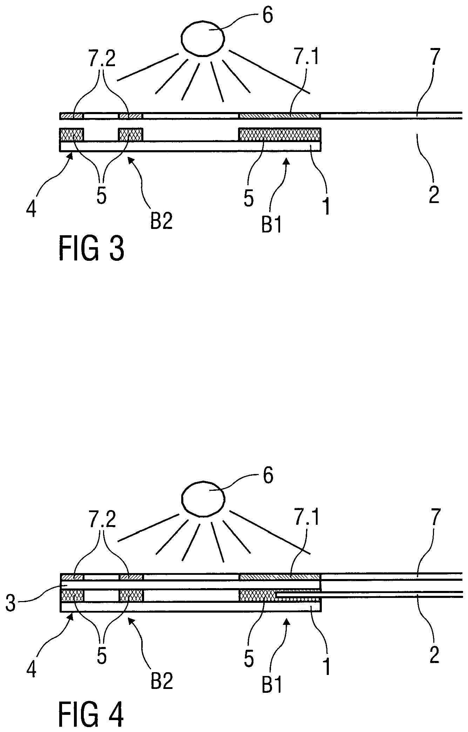

Dazu wird, wie in Figur 3 dargestellt, über dem jeweiligen Bauteil 1, 3, d. h. zwischen einer mit dem Klebstoff 5 beschichteten Seite des jeweiligen Bauteils 1, 3 und einer Bestrahlungsanordnung 6 der Vorrichtung zur Durchführung des Verfahrens, eine Maskierung 7 angeordnet. In Figur 3 ist aus Gründen der Übersichtlichkeit lediglich eine Schnittdarstellung des ersten Bauteils 1 entsprechend der Schnittlinie III-III in Figur 2 dargestellt. Von der Maskierung 7 ist dementsprechend auch lediglich im Wesentlichen der den dargestellten Bereich des ersten Bauteils 1 bedeckende Bereich im Querschnitt dargestellt.

Mit dieser Maskierung 7 ist das jeweilige Bauteil 1, 3 bereichsweise zu maskieren. Dabei weist die Maskierung 7, welche ebenfalls ein Bestandteil der Vorrichtung zur Durchführung des Verfahrens ist, einen ersten Maskierungsbereich 7.1 und zweite Maskierungsbereiche 7.2 auf, wobei der erste Maskierungsbereich 7.1 und die zweiten Maskierungsbereiche 7.2 derart ausgebildet sind, dass sie die von der Bestrahlungsanordnung 6 emittierte Strahlung unterschiedlich stark zum Klebstoff 5 auf dem jeweiligen Bauteil 1, 3 durchlassen.

D. h. der erste Maskierungsbereich 7.1 und die zweiten Maskierungsbereiche 7.2 sind beispielsweise unterschiedlich stark absorbierend und/oder reflektierend für die von der Bestrahlungsanordnung 6 emittierte Strahlung ausgebildet. Je stärker die Maskierungsbereiche 7.1, 7.2 die von der Bestrahlungsanordnung 6 emittierte Strahlung absorbieren und/oder reflektieren, desto geringer ist die Strahlung, welche durch die Maskierung 7 hindurchdringt und den Klebstoff 5 unter dem jeweiligen Maskierungsbereich 7.1, 7.2 erreicht, um diesen photochemisch vorzuhärten, d. h. desto geringer ist die auf den Klebstoff 5 wirkende Bestrahlungsintensität im unter dem jeweiligen Maskierungsbereich 7.1, 7.2 angeordneten Bauteilbereich B1, B2. Die zwischen den Maskierungsbereichen 7.1, 7.2 liegenden Bereiche der Maskierung 7 sind unerheblich, da sich darunter kein Klebstoff 5 befindet, d. h. diese Bereiche können beispielsweise vollständig transparent oder teilweise oder vollständig opak ausgebildet sein.

Auch in Figur 3 ist dies aus Gründen der Übersichtlichkeit lediglich anhand des ersten Bauteils 1, d. h. des ersten Rahmenelementes, dargestellt, wird jedoch für das dritte Bauteil 3, d. h. das zweite Rahmenelement, analog durchgeführt. Dies kann gleichzeitig oder nacheinander erfolgen. Nacheinander kann dies mit derselben Maskierung 7 und derselben Bestrahlungsanordnung 6 der Vorrichtung erfolgen, für ein gleichzeitiges Vorhärten des Klebstoffs 5 wären entsprechend zwei derartige Maskierungen 7 erforderlich und entweder zwei Bestrahlungsanordnungen 6 oder eine ausreichend große Bestrahlungsanordnung 6, so dass damit gleichzeitig beide maskierte Rahmenelemente bestrahlt werden können.

Im hier dargestellten Beispiel ist der erste Maskierungsbereich 7.1 stärker reflektierend und/oder absorbierend für die von der Bestrahlungsanordnung 6 emittierte Strahlung ausgebildet als die zweiten Maskierungsbereiche 7.2, d. h. die zweiten Maskierungsbereiche 7.2 sind für die von der Bestrahlungsanordnung 6 emittierte Strahlung durchlässiger ausgebildet als der erste Maskierungsbereich 7.1. Dadurch kann die von der Bestrahlungsanordnung 6 emittierte Strahlung die zweiten Maskierungsbereiche 7.2 stärker durchdringen als den ersten Maskierungsbereich 7.1. Die Maskierung 7 wird, wie in Figur 3 dargestellt, derart zwischen der Bestrahlungsanordnung 6 und der mit dem Klebstoff 5 beschichteten Seite des ersten Bauteils 1 bzw. des dritten Bauteils 3 positioniert, dass der erste Maskierungsbereich 7.1 den ersten Bauteilbereich B1 gegenüber der von der Bestrahlungsanordnung 6 emittierten Strahlung abdeckt und die zweiten Maskierungsbereiche 7.2 die zweiten Bauteilbereiche B2 gegenüber der von der Bestrahlungsanordnung 6 emittierten Strahlung abdecken.

Anschließend wird das erste Bauteil 1 bzw. das dritte Bauteil 3 mittels der Bestrahlungsanordnung 6 bestrahlt, mit ultravioletter Strahlung und/oder mit Infrarotstrahlung. Bei einer Bestrahlung mit ultravioletter Strahlung und Infrarotstrahlung kann dies beispielsweise nacheinander oder mehrfach abwechselnd erfolgen, beginnend mit der ultravioletten Strahlung oder mit der Infrarotstrahlung. Eine jeweilige Bestrahlungsdauer ist beispielsweise in Abhängigkeit vom jeweils verwendeten Klebstoff 5 und/oder von einer Leistung in der Bestrahlungsanordnung 6 verwendeter Strahlungsquellen vorzugeben.

Diese Strahlungsquellen sind beispielsweise als Licht emittierende Dioden oder als röhrenförmige Strahlungsquellen ausgebildet, welche ultraviolette Strahlung und/oder Infrarotstrahlung emittieren, d. h. die Strahlungsquellen sind entsprechen der zum photochemischen Härten des Klebstoffs 5 erforderlichen Strahlung auszuwählen. Licht emittierende Dioden (LED) sind beispielsweise als UV-Licht und/oder Infrarotlicht emittierende Dioden ausgebildet. Röhrenförmige Strahlungsquellen, insbesondere für UV-Strahlung, sind beispielsweise als so genannte Quecksilberdampf-Niederdruckröhren, Quecksilberdampf-Mitteldruckröhren, Quecksilberdampf-Hochdruckröhren oder Quecksilberdampf-Höchstdruckröhren ausgebildet. Vorzugsweise sind die Strahlungsquellen in der Bestrahlungsanordnung 6 in flächiger Form angeordnet, so dass eine großflächige gleichmäßige Bestrahlung ermöglicht ist. Auf diese Weise wird die Maskierung 7 vollflächig und gleichmäßig bestrahlt. Die unterschiedliche Bestrahlungsintensität für den Klebstoff 5 in den unterschiedlichen Bauteilbereichen B1, B2 des ersten Bauteils 1 bzw. des dritten Bauteils 3 werden dann durch die Maskierung 7 erreicht.

Da der erste Maskierungsbereich 7.1, welchen die von der Bestrahlungsanordnung 6 emittierte Strahlung weniger stark durchdringt, den ersten Bauteilbereich B1 abdeckt, und die zweiten Maskierungsbereiche 7.2, welche die von der Bestrahlungsanordnung 6 emittierte Strahlung stärker durchdringt, die zweiten Bauteilbereiche B2 abdecken, ist die Bestrahlungsintensität, welche auf die zweiten Bauteilbereiche B2 und den dort aufgebrachten Klebstoff 5 einwirkt, höher als die Bestrahlungsintensität, welche auf den ersten Bauteilbereich B1 und den dort aufgebrachten Klebstoff 5 einwirkt. Dadurch wird bei einer Bestrahlung mit nur einer Bestrahlungsanordnung 6 für alle mit Klebstoff 5 beschichteten Bauteilbereiche B1, B2 des ersten Bauteils 1 bzw. des dritten Bauteils 3 ein unterschiedlich starkes Vorhärten des Klebstoffs 5 in den verschiedenen Bauteilbereichen B1, B2 erreicht. In diesem Beispiel wird der Klebstoff 5 im ersten Bauteilbereich B1 aufgrund der geringeren Bestrahlungsintensität geringer vorgehärtet und in den zweiten Bauteilbereichen B2 aufgrund der stärkeren Bestrahlungsintensität stärker vorgehärtet. Dies führt dazu, dass der Klebstoff 5 nach dem Vorhärten im ersten Bauteilbereich B1 eine geringere Viskosität aufweist als in den zweiten Bauteilbereichen B2, d. h. der Klebstoff 5 weist im ersten Bauteilbereich B1 eine höhere Fluidität auf, ist also flüssiger, als in den zweiten Bauteilbereichen B2. Auf diese Weise wird eine Rheologie des Klebstoffs 5 an jeweilige spezifische Erfordernisse und Materialeigenschaften angepasst.

Im dritten Verfahrensschritt S3 wird das zweite Bauteil 2, d. h. die katalysatorbeschichtete Membran, zwischen dem auf die geschilderte Weise mit Klebstoff 5 beschichteten ersten Bauteil 1 und dem auf die geschilderte Weise mit Klebstoff 5 beschichteten dritten Bauteil 3, d. h. zwischen den Rahmenelementen, angeordnet, um die Bauteile 1, 2, 3 im vierten Verfahrensschritt S4 durch Aushärten des Klebstoffs 5 miteinander zu verkleben, wie in Figur 4 dargestellt. Auch in Figur 4 ist, ähnlich zu Figur 3, aus Gründen der Übersichtlichkeit lediglich eine bereichsweise Querschnittdarstellung der Bauteile 1, 2, 3 gezeigt.

Nach diesem Anordnen der Bauteile 1, 2, 3 auf die beschriebene Weise liegen die beiden Rahmenelemente, d. h. das erste Bauteil 1 und das dritte Bauteil 3, in den zweiten Bauteilbereichen B2 direkt aufeinander auf und werden mittels des Klebstoffs 5 miteinander verklebt. Da der Klebstoff 5 in diesen zweiten Bauteilbereichen B2 eine höhere Viskosität aufweist, wird hier ein Verlaufen oder Zerfließen des Klebstoffs 5 vermieden. Dadurch wird eine hohe geometrische Genauigkeit und Konturtreue der Klebstoffanordnung auf dem ersten Bauteil 1 und dem dritten Bauteil 3 ermöglicht, welche in den zweiten Bauteilbereichen B2 erforderlich ist, da es sich bei den hier ausgebildeten Einström- und/oder Ausströmbereichen um freistehende Strukturen im Fügeverbund der Membran-Elektroden-Anordnung 4 handelt.

Im ersten Bauteilbereich B1 wird zum Befestigen des zweiten Bauteils 2 ein Randbereich dieses zweiten Bauteils 2, d. h. der katalysatorbeschichteten Membran, angeordnet, so dass dieser Randbereich mittels des Klebstoffs 5 mit dem ersten Bauteil 1 und dem dritten Bauteil 3 verklebt werden kann. In diesem ersten Bauteilbereich B1, mit welchem der Randbereich der katalysatorbeschichteten Membran zu verkleben ist, hat der Klebstoff 5 nach dem Verkleben der Membran-Elektroden-Anordnung 4 zusätzlich zur Verbindungsfunktion der Bauteile 1, 2, 3 noch eine Dichtfunktion, d. h. der Klebstoff 5 soll hier eine Dichtung ausbilden, welche die katalysatorbeschichtete Membran gegenüber dem aus den beiden Rahmenelementen gebildeten Rahmen abdichtet, so dass ein seitliches Entweichen der Reaktionsgase zwischen den zwei Rahmenelementen hindurch, d. h. zwischen dem ersten Bauteil 1 und dem dritten Bauteil 3 hindurch, verhindert wird.

Um dies zu erreichen, muss der Klebstoff 5 in den Randbereich des zweiten Bauteils 2, d. h. der porösen katalysatorbeschichteten Membran, eindringen und den Randbereich vollständig seitlich umschließen sowie eine Oberseite und Unterseite der katalysatorbeschichteten Membran in diesem Randbereich ausreichend benetzen, so dass ein abdichtendes Verkleben des zweiten Bauteils 2 mit dem ersten Bauteil 1 und dem dritten Bauteil 3 sichergestellt werden kann. Zudem muss der Klebstoff 5, um die erforderliche Dichtwirkung zu erreichen, die unebene, raue und poröse Oberfläche des Randbereichs der katalysatorbeschichteten Membran ausgleichen, so dass keine Öffnungen zwischen den Bauteilen 1, 2, 3 in diesem Bereich verbleiben. Dies wird durch die geringere Viskosität des Klebstoffs 5 im ersten Bauteilbereich B1 des ersten Bauteils 1 und des dritten Bauteils 3 ermöglicht und sichergestellt.

Wie bereits erwähnt, werden, obwohl in den Figuren 2 und 3 jeweils nur das erste Bauteil 1 dargestellt ist, in der beschriebenen Ausführungsform des Verfahrens das erste Bauteil 1 und das dritte Bauteil 3, d. h. die beiden Rahmenelemente, auf gleiche Weise mit dem Klebstoff 5 beschichtet und dieser wird auf gleiche Weise vorgehärtet. Es ist jedoch in anderen, hier nicht dargestellten Ausführungsformen des Verfahrens auch möglich, den Klebstoff 5 in unterschiedlicher Weise auf die beiden Rahmenelemente, d. h. auf das erste Bauteil 1 und das dritte Bauteil 3, aufzubringen und/oder vorzuhärten. Beispielsweise kann der Klebstoffauftrag in einer derartigen anderen Ausführungsform des Verfahrens am dritten Bauteil 3 lediglich im ersten Bauteilbereich B1 erfolgen, um das ordnungsgemäße Verkleben des dritten Bauteils 3 mit dem zweiten Bauteil 2 sicherzustellen. Im zweiten Bauteilbereich B2 des dritten Bauteils 3 erfolgt dann beispielsweise kein derartiger Klebstoffauftrag, weil der auf dem ersten Bauteil 1 in diesem zweiten Bauteilbereich B2 aufgebrachte Klebstoff 5 bereits ausreicht, um das erste Bauteil 1 und das dritte Bauteil 3, d. h. die beiden Rahmenelemente, sicher miteinander zu verkleben.

Zum vollständigen Verkleben der Bauteile 1, 2, 3 miteinander, um die Membran-Elektroden-Anordnung 4 auszubilden, werden die auf die beschriebene und in Figur 4 dargestellte Weise aufeinander angeordneten Bauteile 1, 2, 3 erneut mittels der Bestrahlungsanordnung 6 der Vorrichtung zur Durchführung des Verfahrens bestrahlt, um dadurch den Klebstoff 5 vollständig auszuhärten. Alternativ könnte dies auch mit einer hier nicht dargestellten weiteren Bestrahlungsanordnung der Vorrichtung erfolgen, falls beispielsweise zum Aushärten des Klebstoffs 5 andere Strahlungsquellen erforderlich sind als zum Vorhärten. Beispielsweise könnte dann das Vorhärten mittels ultravioletter Strahlung durchgeführt werden und das Aushärten mittels Infrarotstrahlung oder umgekehrt. Bei einer Bestrahlung mit ultravioletter Strahlung und Infrarotstrahlung zum Aushärten kann dies auch hier analog zum Vorhärten beispielsweise nacheinander oder mehrfach abwechselnd erfolgen, beginnend mit der ultravioletten Strahlung oder mit der Infrarotstrahlung. Eine jeweilige Bestrahlungsdauer ist auch hier beispielsweise in Abhängigkeit vom jeweils verwendeten Klebstoff 5 und/oder von einer Leistung der in der Bestrahlungsanordnung 6 verwendeten Strahlungsquellen vorzugeben.

Um das photochemische Aushärten des Klebstoffs 5 zu ermöglichen, muss zumindest das erste Bauteil 1 und/oder das dritte Bauteil 3 ausreichend durchlässig für die von der Bestrahlungsanordnung 6 emittierte Strahlung ausgebildet sein, d. h. bei Verwendung ultravioletter Strahlung und/oder von Infrarotstrahlung transparent oder zumindest ausreichend transluzent für die jeweilige Strahlung, damit diese den Klebstoff 5 erreichen kann, um diesen auszuhärten. Es kann besonders bevorzugt sein, dass sowohl das erste Bauteil 1 als auch das dritte Bauteil 3 ausreichend durchlässig für die von der Bestrahlungsanordnung 6 emittierte Strahlung ausgebildet sind.

Im in Figur 4 dargestellten Beispiel, in welchem die gleiche Bestrahlungsanordnung 6 zum Aushärten des Klebstoffs 5 verwendet wird, welche bereits zum Vorhärten des Klebstoffs 5 verwendet wurde, wird hier nur eine Seite der dargestellten Bauteilanordnung bestrahlt, um durch das Aushärten des Klebstoffs 5 die Bauteile 1, 2, 3 miteinander zu verbinden und dadurch die Membran-Elektroden-Anordnung 4 fertigzustellen. Es ist jedoch auch möglich, um ein optimales Aushärten des Klebstoffs 5 in allen Bereichen der Bauteilanordnung sicherzustellen, die Bestrahlung von beiden Seiten durchzuführen, entweder nacheinander durch Umpositionieren der Bauteilanordnung und/oder der Bestrahlungsanordnung 6, oder gleichzeitig.

Für ein gleichzeitiges Bestrahlen wäre es jedoch erforderlich, dass die Bestrahlungsanordnung 6 auf beiden Seiten der Bauteilanordnung, d. h. sowohl auf der Seite, auf welcher das erste Bauteil 1 angeordnet ist, als auch auf der Seite, auf welcher das zweite Bauteil 2 angeordnet ist, entsprechende Strahlungsquellen aufweist, oder die Vorrichtung zur Durchführung des Verfahrens weist zwei Bestrahlungsanordnungen 6 auf, zwischen denen die auf die beschriebene Weise aufeinander angeordneten Bauteile 1, 2, 3, welche die in Figur 4 dargestellte Bauteilanordnung bilden, zum Aushärten des Klebstoffs 5 anzuordnen sind.

Im in Figur 4 dargestellten Beispiel ist auf dem dritten Bauteil 3, d. h. zwischen dem dritten Bauteil 3 und der Bestrahlungsanordnung 6, erneut die Maskierung 7 angeordnet. Dabei handelt es sich in dem dargestellten Beispiel um die gleiche Maskierung 7, welche auch schon zum Vorhärten des Klebstoffs 5 auf dem ersten Bauteil 1 und dem dritten Bauteil 3 verwendet wurde. Diese Maskierung 7 hat somit den gleichen Effekt, d. h. der erste Maskierungsbereich 7.1, welchen die von der Bestrahlungsanordnung 6 emittierte Strahlung weniger stark durchdringt, deckt nun gleichzeitig den ersten Bauteilbereich B1 des ersten Bauteils 1 und des dritten Bauteils 3 gegenüber der von der Bestrahlungsanordnung 6 emittierten Strahlung ab und die zweiten Maskierungsbereiche 7.2, welche die von der Bestrahlungsanordnung 6 emittierte Strahlung stärker durchdringt, decken nun gleichzeitig die zweiten Bauteilbereiche B2 des ersten Bauteils 1 und des dritten Bauteils 3 gegenüber der von der Bestrahlungsanordnung 6 emittierten Strahlung ab.

Dadurch ist die Bestrahlungsintensität, welche auf die zweiten Bauteilbereiche B2 und den dort aufgebrachten Klebstoff 5 einwirkt, höher als die Bestrahlungsintensität, welche auf den ersten Bauteilbereich B1 und den dort aufgebrachten Klebstoff 5 einwirkt. Dadurch wird bei einer Bestrahlung mit nur einer Bestrahlungsanordnung 6 für alle mit Klebstoff 5 beschichteten Bauteilbereiche B1, B2 auch ein unterschiedlich starkes Aushärten des Klebstoffs 5 in den verschiedenen Bauteilbereichen B1, B2 erreicht. In diesem Beispiel wird der Klebstoff 5 im ersten Bauteilbereich B1 aufgrund der geringeren Bestrahlungsintensität geringer ausgehärtet und in den zweiten Bauteilbereichen B2 aufgrund der stärkeren Bestrahlungsintensität stärker ausgehärtet. Dadurch kann beispielsweise im ersten Bauteilbereich B1, d. h. im Verbindungsbereich des zweiten Bauteils 2 mit dem ersten Bauteil 1 und dem dritten Bauteil 3, ein zu starkes Aushärten und dadurch beispielsweise eine Versprödung des Klebstoffs 5 vermieden werden, so dass der Klebstoff 5 beispielsweise weiterhin eine vorgegebene Elastizität aufweist, um seine Dichtungsfunktion in diesem Bereich sicherzustellen.

Alternativ kann in einer weiteren Ausführungsform des Verfahrens beispielsweise auch eine anders ausgebildete weitere Maskierung verwendet werden, welche dann andere Maskierungsbereiche mit einer jeweils anderen Durchlässigkeit für die von der Bestrahlungsanordnung 6 emittierte Strahlung aufweist, so dass dann beispielsweise der Klebstoff 5 im ersten Bauteilbereich B1 mit einer höheren Bestrahlungsintensität bestrahlt wird als in den zweiten Bauteilbereichen B2, um das vorhergehenden unterschiedliche Vorhärten des Klebstoffs 5 wieder auszugleichen und dadurch ein gleichmäßiges Aushärten des Klebstoffs 5 sicherzustellen, d. h. der Klebstoff 5 im ersten Bauteilbereich B1, welcher geringer vorgehärtet wurde, würde dann im vierten Verfahrensschritt S4 stärker gehärtet und der Klebstoff 5 in den zweiten Bauteilbereichen B2, welcher stärker vorgehärtet wurde, würde dann im vierten Verfahrensschritt S4 geringer gehärtet, so dass eine abschließende Konsistenz des Klebstoffs 5 nach dem Aushärten in allen Bauteilbereichen B1, B2 gleich ist.

Im in Figur 4 dargestellten Beispiel wird die Bauteilanordnung, wie bereits beschrieben, lediglich von einer Seite aus mittels der Bestrahlungsanordnung 6 bestrahlt, so dass auch nur auf dieser Seite die Maskierung 7 angeordnet ist. Soll die Bauteilanordnung alternativ von beiden Seiten bestrahlt werden, wie ebenfalls bereits beschrieben, und soll bei beiden Bestrahlungen eine derartige Maskierung 7 verwendet werden, so wären entsprechend auf beiden Seiten der Bauteilanordnung jeweils eine derartige Maskierung 7 erforderlich oder es können die beiden Seiten der Bauteilanordnung nacheinander bestrahlt werden, so dass die eine Maskierung 7 ausreichend wäre. Sie müsste dann lediglich zwischen der jeweils zu bestrahlenden Seite der Bauteilanordnung und der Bestrahlungsanordnung 6 angeordnet werden.

### Bezugszeichenliste

- 1: erstes Bauteil
- 2: zweites Bauteil
- 3: drittes Bauteil
- 4: Membran-Elektroden-Anordnung
- 5: Klebstoff
- 6: Bestrahlungsanordnung
- 7: Maskierung
- 7.1: erster Maskierungsbereich
- 7.2: zweiter Maskierungsbereich

- A1: erste Aussparung
- A2: zweite Aussparung
- B1: erster Bauteilbereich
- B2: zweite Bauteilbereiche
- S1: erster Verfahrensschritt
- S2: zweiter Verfahrensschritt
- S3: dritter Verfahrensschritt
- S4: vierter Verfahrensschritt

## Patentansprüche

1. Verfahren zum Verbinden von Bauteilen (1, 2, 3) einer Brennstoffzelle, wobei
a) ein photochemisch härtbarer Klebstoff (5) in flüssiger Form zumindest bereichsweise auf zumindest ein Bauteil (1, 2, 3) der Brennstoffzelle aufgebracht wird, dann
b) der Klebstoff (5) photochemisch vorgehärtet wird, dann
c) das Bauteil (1, 2, 3) mit dem vorgehärteten Klebstoff (5) mit zumindest einem weiteren Bauteil (1, 2, 3) der Brennstoffzelle in Kontakt gebracht wird und dann
d) der Klebstoff (5) ausgehärtet wird,
**dadurch gekennzeichnet, dass** der photochemisch härtbare Klebstoff (5) in zumindest zwei unterschiedlichen Bauteilbereichen (B1, B2) des Bauteils (1, 2, 3) unterschiedlich stark photochemisch vorgehärtet wird.

2. Verfahren nach Anspruch 1,
**dadurch gekennzeichnet, dass** der photochemisch härtbare Klebstoff (5) zumindest bereichsweise auf ein als ein erstes Rahmenelement einer Membran-Elektroden-Anordnung (4) ausgebildetes erstes Bauteil (1) der Brennstoffzelle und auf ein als ein zweites Rahmenelement der Membran-Elektroden-Anordnung (4) ausgebildetes drittes Bauteil (3) der Brennstoffzelle aufgebracht wird, wobei nach dem photochemischen Vorhärten des photochemisch härtbaren Klebstoffs (5) ein als eine katalysatorbeschichtete Membran der Membran-Elektroden-Anordnung (4) ausgebildetes zweites Bauteil (2) der Brennstoffzelle zwischen dem ersten Bauteil (1) und dem dritten Bauteil (3) positioniert wird, die drei Bauteile (1, 2, 3) zusammengefügt werden und der photochemisch härtbare Klebstoff (5) ausgehärtet wird.

3. Verfahren nach Anspruch 1 oder 2,
**dadurch gekennzeichnet, dass** der photochemisch härtbare Klebstoff (5) mittels ultravioletter Strahlung und/oder mittels Infrarotstrahlung photochemisch vorgehärtet wird.

4. Verfahren nach einem der Ansprüche 1 bis 3,
**dadurch gekennzeichnet, dass** der photochemisch härtbare Klebstoff (5) photochemisch ausgehärtet wird, insbesondere mittels ultravioletter Strahlung und/oder mittels Infrarotstrahlung.

5. Verfahren nach einem der vorhergehenden Ansprüche,
**dadurch gekennzeichnet, dass** das mit dem photochemisch härtbaren Klebstoff (5) beschichtete Bauteil (1, 2, 3) vor dem photochemischen Vorhärten des photochemisch härtbaren Klebstoffs (5) derart maskiert wird, dass zum photochemischen Vorhärten des photochemisch härtbaren Klebstoffs (5) die zumindest zwei Bauteilbereiche (B1, B2) mit einer unterschiedlichen Bestrahlungsintensität bestrahlt werden.

6. Verfahren nach einem der vorhergehenden Ansprüche,
**dadurch gekennzeichnet, dass** der photochemisch härtbare Klebstoff (5) mittels Siebdruck auf das zumindest eine Bauteil (1, 2, 3) aufgebracht wird.

7. Vorrichtung zum Verbinden von Bauteilen (1, 2, 3) einer Brennstoffzelle zur Durchführung eines Verfahrens nach einem der Ansprüche 1 bis 6, umfassend eine Aufbringeinheit zum zumindest bereichsweisen Aufbringen eines photochemisch härtbaren Klebstoffs (5) in flüssiger Form auf zumindest ein Bauteil (1, 2, 3) der Brennstoffzelle, eine Bestrahlungsanordnung (6) zum photochemischen Vorhärten des photochemisch härtbaren Klebstoffs (5) und eine Maskierung (7) zum zumindest bereichsweisen Maskieren des mit dem photochemisch härtbaren Klebstoff (5) beschichteten Bauteils (1, 2, 3) der Brennstoffzelle derart, dass zum photochemischen Vorhärten des photochemisch härtbaren Klebstoffs (5) zumindest zwei Bauteilbereiche (B1, B2) mit einer unterschiedlichen Bestrahlungsintensität bestrahlbar sind.

8. Vorrichtung nach Anspruch 7,
**dadurch gekennzeichnet, dass** die Bestrahlungsanordnung (6) zumindest eine als Licht emittierende Diode ausgebildete Strahlungsquelle und/oder zumindest eine röhrenförmige Strahlungsquelle aufweist.

9. Vorrichtung nach Anspruch 8,
**dadurch gekennzeichnet, dass** die zumindest eine Strahlungsquelle als eine ultraviolette Strahlung abstrahlende Strahlungsquelle und/oder als eine Infrarotstrahlung abstrahlende Strahlungsquelle ausgebildet ist.

10. Vorrichtung nach einem der Ansprüche 7 bis 9,
**dadurch gekennzeichnet, dass** die Aufbringeinheit als eine Siebdruckeinheit ausgebildet ist.

## Claims

1. Method for joining components (1, 2, 3) of a fuel cell, wherein
a) a photochemically curable adhesive (5) in liquid form is applied to at least some areas of at least one component (1, 2, 3) of the fuel cell, then
b) the adhesive (5) is photochemically pre-cured, then
c) the component (1, 2, 3) with the pre-cured adhesive (5) is brought into contact with at least one further component (1, 2, 3) of the fuel cell, and then
d) the adhesive is cured,
**characterised in that** the photochemically curable adhesive (5) is photochemically pre-cured to different strengths in at least two different component areas (B1, B2) of the component (1, 2, 3).

2. Method according to claim 1,
**characterised in that** the photochemically curable adhesive (5) is applied to a first component (1) of the fuel cell, which is designed as a first frame element of a membrane electrode assembly (4), and to a third component (3) of the fuel cell, which is designed as a second frame element of the membrane electrode assembly (4), wherein, following the photochemical pre-cure of the photochemically curable adhesive (5), a second component (2) of the fuel cell, which is designed as a catalyst-coated membrane of the membrane electrode assembly (4), is positioned between the first component (1) and the third component (3), the three components (1, 2, 3) are joined together and the photochemically curable adhesive (5) is cured.

3. Method according to claim 1 or 2,
**characterised in that** the photochemically curable adhesive (5) is photochemically pre-cured by means of ultraviolet radiation and/or by means of infrared radiation.

4. Method according to any of claims 1 to 3,
**characterised in that** the photochemically curable adhesive (5) is photochemically cured, in particular by means of ultraviolet radiation and/or by means of infrared radiation.

5. Method according to any of the preceding claims,
**characterised in that** the component (1, 2, 3) coated with the photochemically curable adhesive (5) is masked in such a way before the photochemical pre-cure of the photochemically curable adhesive (5) that the at least two different component areas (B1, B2) are irradiated with different irradiation intensities for the photochemical pre-cure of the photochemically curable adhesive (5).

6. Method according to any of the preceding claims,
**characterised in that** the photochemically curable adhesive (5) is applied to the at least one component (1, 2, 3) by means of screen printing.

7. Apparatus for joining components (1, 2 3) of a fuel cell, for carrying out the method according to any of claims 1 to 6, comprising an application unit for applying a photochemically curable adhesive (5) in liquid form to at least some areas of at least one component (1, 2, 3) of the fuel cell, an irradiation assembly (6) for photochemically pre-curing the photochemically curable adhesive (5) and a mask for masking at least some areas of the component (1, 2, 3) coated with the photochemically curable adhesive (5) in such a way that, for photochemically pre-curing the photochemically curable adhesive (5), at least two component areas (B1, B2) can be irradiated with different irradiation intensities.

8. Apparatus according to claim 7,
**characterised in that** the irradiation assembly (6) comprises at least one radiation source designed as a light-emitting diode and/or at least one tubular radiation source.

9. Apparatus according to claim 8,
**characterised in that** the at least one radiation source is designed as a radiation source emitting ultraviolet radiation and/or as a radiation source emitting infrared radiation.

10. Apparatus according to any of claims 7 to 9,
**characterised in that** the application unit is designed as a screen printing unit.

## Revendications

1. Procédé destiné à relier des composants (1, 2, 3) d'une pile à combustible,
a) un adhésif durcissable par voie photochimique (5) étant appliqué sous forme liquide au moins à certains endroits sur au moins un composant (1, 2, 3) de la pile à combustible, ensuite
b) l'adhésif (5) étant prédurci par voie photochimique, ensuite
c) le composant (1,2, 3) comportant l'adhésif prédurci étant mis en contact avec au moins un autre composant (1, 2, 3) de la pile à combustible et ensuite
d) l'adhésif (5) étant durci,
**caractérisé en ce que** l'adhésif durcissable par voie photochimique (5) est prédurci de manière très différente par voie photochimique dans au moins deux zones différentes (B1, B2) du composant (1,2, 3).

2. Procédé selon la revendication 1, **caractérisé en ce que** l'adhésif durci par voie photochimique (5) est appliqué au moins à certains endroits sur un premier composant (1) de la pile à combustible conçu sous la forme d'un premier élément de cadre d'un ensemble électrode-membrane (1) et sur un troisième composant (3) de la pile à combustible conçu sous la forme d'un second élément de cadre de l'ensemble électrode-membrane (4), après le prédurcissement par voie photochimique de l'adhésif durcissable par voie photochimique (5) étant positionné un second composant (2) de la pile à combustible conçu sous la forme d'une membrane à revêtement catalytique de l'ensemble électrode-membrane (4) entre le premier composant (1) et le troisième composant (3), les trois composants (1, 2, 3) étant assemblés et l'adhésif durcissable par voie photochimique (5) étant durci.

3. Procédé selon la revendication 1 ou 2, **caractérisé en ce que** l'adhésif (5) durcissable par voie photochimique étant prédurci par voie photochimique au moyen d'un rayonnement ultraviolet et/ou au moyen d'un rayonnement infrarouge.

4. Procédé selon l'une quelconque des revendications 1 à 3, **caractérisé en ce que** l'adhésif (5) durcissable par voie photochimique est durci par voie photochimique, en particulier au moyen d'un rayonnement ultraviolet et/ou au moyen d'un rayonnement infrarouge.

5. Procédé selon l'une quelconque des revendications précédentes, **caractérisé en ce que** le composant (1, 2, 3) revêtu de l'adhésif durcissable par voie photochimique (5) est masqué avant le prédurcissement par voie photochimique de l'adhésif durcissable par voie photochimique (5), de manière à ce que pour le prédurcissement par voie photochimique de l'adhésif durcissable par voie photochimique (5), les au moins deux zones de composants (B1, B2) soient soumis au rayonnement d'une intensité de rayonnement différente.

6. Procédé selon l'une quelconque des revendications précédentes, **caractérisé en ce que** l'adhésif durcissable par voie photochimique (5) est appliqué par sérigraphie sur l'au moins un composant (1, 2, 3).

7. Dispositif destiné à relier des composants (1, 2, 3) d'une pile à combustible pour exécuter un procédé selon l'une quelconque des revendications 1 à 6, comprenant une unité d'application destinée à appliquer au moins à certains endroits un adhésif durcissable par voie photochimique (5) sous forme liquide sur au moins un composant (1,2, 3) de la pile à combustible, un ensemble de rayonnement (6) destiné au prédurcissement par voie photochimique de l'adhésif durcissable par voie photochimique (5) et un masquage (7) destiné à masquer au moins certains endroits du composants revêtu de l'adhésif durcissable par voie photochimique (5) de la pile à combustible de manière à ce que pour le prédurcissement par voie photochimique de l'adhésif durcissable par voie photochimique (5) au moins deux zones de composant (B1, B2) puissent être soumises au rayonnement d'une intensité différente.

8. Dispositif selon la revendication 7, **caractérisé en ce que** l'ensemble de rayonnement (6) comprend au moins une source de rayonnement conçue sous la forme de diode émettant de la lumière et/ou au moins une source de rayonnement tubulaire.

9. Dispositif selon la revendication 8, **caractérisé en ce que** l'au moins une source de lumière est conçue sous la forme d'une source de rayonnement émettant un rayonnement ultraviolet et/ou sous la forme d'une source de rayonnement émettant un rayonnement infrarouge.

10. Dispositif selon l'une quelconque des revendications 7 à 9, **caractérisé en ce que** l'unité d'application est conçue sous la forme d'une unité d'impression sérigraphique.
